# EUROPÄISCHE PATENTSCHRIFT

(11) **EP 2 665 906 B1**
(45) Veröffentlichungstag und Bekanntmachung des Hinweises auf die Patenterteilung: **03.04.2019**
(21) Anmeldenummer: 11788892.5
(22) Anmeldetag: 02.12.2011
(51) Int. Cl.: F02D 41/24, F02D 41/40

(54) **VERFAHREN ZUR ANSTEUERUNG EINES INJEKTORS IN EINER KRAFTSTOFFEINSPRITZANLAGE IN EINER BRENNKRAFTMASCHINE**
METHOD FOR ACTUATING AN INJECTOR IN A FUEL INJECTION SYSTEM IN AN INTERNAL COMBUSTION ENGINE
PROCÉDÉ DE COMMANDE D'UN INJECTEUR DANS UN SYSTÈME D'INJECTION DE CARBURANT D'UN MOTEUR À COMBUSTION INTERNE

(30) Priorität: 17.01.2011 DE 102011002764
(43) Veröffentlichungstag der Anmeldung: 27.11.2013
(73) Patentinhaber: Robert Bosch GmbH, 70442 Stuttgart (DE)
(72) Erfinder: JOOS, Klaus, 74399 Walheim (DE); FRIEDMANN, Harry, 71665 Vaihingen An Der Enz (DE); HIRCHENHEIN, Achim, 54311 Trierweiler (DE); RESCHKE, Christian, 71229 Leonberg (DE); RAPP, Holger, 71254 Ditzingen (DE); HESS, Werner, 70499 Stuttgart (DE); KOCH, Andreas, 74369 Loechgau (DE); HAMEDOVIC, Haris, 71696 Moeglingen (DE); KOENIG, Joerg, 70197 Stuttgart (DE); SCHLUETER, Ruben, 70435 Stuttgart (DE); WIRTH, Stephanie, 70499 Stuttgart (DE)
(86) Internationale Anmeldenummer: PCT/EP2011/071609
(87) Internationale Veröffentlichungsnummer: WO 2012/097907

(56) Entgegenhaltungen:
- EP-A2- 0 878 617
- EP-A2- 1 045 125
- WO-A1-2004/090315
- DE-A1- 3 811 436
- DE-A1-102007 060 638
- GB-A- 2 284 908

## Beschreibung

Die vorliegende Erfindung betrifft ein Verfahren zur Ansteuerung eines Injektors in einer Kraftstoffeinspritzanlage in einer Brennkraftmaschine.

### Stand der Technik

Kraftstoffeinspritzeinlagen ermöglichen die Zumessung des für eine Verbrennung in einer Brennkraftmaschine benötigten Kraftstoffs mittels einer oder mehrerer Injektoren (auch als Einspritzventil oder Einspritzdüse bezeichnet). Bei der Benzin-Direkteinspritzung und der Common-Rail-Einspritzung wird der Kraftstoff direkt in den Brennraum eingespritzt. Für die Verbrennungsqualität und damit den Verbrauch sowie das Abgasverhalten der Brennkraftmaschine ist die zugemessene Kraftstoffmenge von entscheidender Bedeutung.

Die zugemessene Kraftstoffmenge wird jedoch durch Eigenschaften des Injektors selbst beeinflusst. Aufgrund von Exemplarstreuungen, die bei den innerhalb einer Brennkraftmaschine verwendeten Injektoren auftreten, ist die von diesen Injektoren zugemessene Kraftstoffmenge meist unterschiedlich, was eine verminderte Verbrennungsqualität mit sich bringt. Insbesondere im sogenannten Kleinmengenbereich (Teilhubbereich, ballistischer Bereich) wirkt sich eine relative Exemplarstreuung der Injektoren besonders aus. Zur Adressierung dieses Problems werden Injektorkalibrierungsverfahren eingesetzt, bei denen ein Zusammenhang zwischen Ansteuerdauer (ti) und Einspritzmenge (q) injektorindividuell hergestellt wird, um diesen für zukünftige Einspritzungen verwenden zu können.

Verschiedene Injektorkalibrierungsverfahren werden in der DE 10 2009 003 212 A1 und der DE 10 2009 003 211 A1 beschrieben. Diese Verfahren sind jedoch regelungstechnisch sehr aufwendig, dass für jeden Ansteuervorgang Messgrößen für die Regelung ermittelt werden Dokument GB2284908 offenbart eine zylinderindividuelle Korrektur für die Ansteuerdauer in Abhängigkeit von Druck und Temperatur eines Kraftstoffs.

Es ist wünschenswert, die Injektorkalibrierung zu vereinfachen.

### Offenbarung der Erfindung

Erfindungsgemäß wird ein Verfahren zur Ansteuerung eines Injektors in einer Kraftstoffeinspritzanlage in einer Brennkraftmaschine mit den Merkmalen des Patentanspruchs 1 vorgeschlagen. Vorteilhafte Ausgestaltungen sind Gegenstand der Unteransprüche sowie der nachfolgenden Beschreibung.

### Vorteile der Erfindung

Die Erfindung basiert auf der Erkenntnis, dass eine Injektorkalibrierung insbesondere für den ballistischen Bereich bei nahezu gleichbleibender Güte, jedoch stark vermindertem Berechnungsaufwand durchgeführt werden kann, wenn anstelle einer aufwendigen Regelung nur ein druck- und temperaturabhängiger, injektorindividueller Korrekturwert für die Ansteuerdauer verwendet wird. Eine aufwendige Regelung der Einspritzdauer selbst ist nicht notwendig. Unterschiede zwischen einzelnen Ventilen bzw. Effekte der Ventilalterung werden durch eine einfache Methode adaptiert und können als Korrekturwert direkt in die Vorsteuerung der Ansteuerdauer einbezogen werden, insbesondere auch dann, wenn keine Regelung der Einspritzdauer erfolgen kann. Die Erfindung deckt Alterungseffekte und Exemplarstreuungen der Einspritzventile auch ohne Regelung durch das Verwenden eines druck- und temperaturabhängigen Kennwerts ab. Dieser Kennwert wird direkt in die Vorsteuerung des Einspritzventils einbezogen und steht immer zur Verfügung, z.B. beim Start, bei Nichtregelbereitschaft usw.

In bevorzugter Ausgestaltung wird eine Anzahl von injektorindividuellen Korrekturwerten in einem Kennfeld hinterlegt. Für die Korrektur der Ansteuerdauer wird dann einfach der sich aus dem Kennfeld ergebende, injektorindividuelle Korrekturwert berücksichtigt. Der Berechnungsaufwand kann reduziert werden, da insbesondere die Notwendigkeit entfällt, sozusagen in Echtzeit Korrekturwerte aus Messwerten zu ermitteln. Vielmehr reicht es aus, die Korrekturwerte im Vorhinein (üblicherweise zu beliebigen, vorgegebenen oder regelmäßigen Zeitpunkten während der gesamten Betriebsdauer) zu bestimmen, d.h. bevor sie tatsächlich in die Ansteuerung eingehen, und dann nur noch aus dem Kennfeld auszulesen.

Im Rahmen dieser Erfindung wird als Ansteuerdauer (ti) die Dauer bezeichnet, über welche ein zuständiges Steuergerät den Injektor mit Strom beaufschlagt, d.h. ansteuert. Als Einspritzdauer (t_offen) wird die Dauer bezeichnet, in der der Injektor zumindest teilweise geöffnet ist und daher Kraftstoff eingespritzt wird. Aufgrund mechanischer, hydraulischer und elektrischer Verzögerungen beginnt der Öffnungsvorgang des Injektors eine erste Verzugsdauer nach dem Beginn der Ansteuerung und der Schließvorgang wiederum endet eine bestimmte zweite Verzugsdauer (auch als Schließverzugsdauer bezeichnet) nach dem Ende der Ansteuerung.

Eine besonders genaue Korrektur kann erreicht werden, wenn der injektorindividuelle Korrekturwert auf Grundlage einer Abweichung zwischen einer Ist-Einspritzdauer und einer Soll-Einspritzdauer dieses Injektors ermittelt wird.

Eine einfache Möglichkeit, einen injektorindividuellen Korrekturwert für zumindest einen Betriebspunkt - welcher sich zumindest durch Druck und Temperatur des einzuspritzenden Kraftstoffs auszeichnet - zu ermitteln, ist, bei festem Druck und fester Temperatur des einzuspritzenden Kraftstoffs eine Soll-Einspritzmenge und damit die Soll-Einspritzdauer zu variieren und den injektorindividuellen Korrekturwert aus einer Abhängigkeit der Ist-Einspritzdauer von der Soll-Einspritzdauer zu ermitteln.

Gemäß einer bevorzugten Ausführungsform wird dabei für eine Soll-Einspritzmenge eine erste Ansteuerdauer, bspw. auf herkömmliche Weise, bestimmt und zur Ansteuerung verwendet. Anschließend wird die sich hieraus ergebende Ist-Einspritzdauer (bspw. modellbasiert oder messtechnisch) ermittelt und mit der Soll-Einspritzdauer verglichen. Ist die Ist-Einspritzdauer zu lang, wird die Ansteuerdauer reduziert, ist die Ist-Einspritzdauer zu kurz, wird die Ansteuerdauer erhöht. Wird die Soll-Einspritzdauer dabei erreicht, kann aus der Differenz der alten und der neuen Ansteuerdauer der injektorindividuelle Korrekturwert bestimmt werden. Diese Art der Ermittlung ist besonders einfach zu implementieren und liefert dennoch gute Ergebnisse. zur Verbesserung kann eine Inter- oder Extrapolation durchgeführt werden, um den Zusammenhang zwischen Ansteuerdauer und Einspritzdauer genauer zu bestimmen.

Ebenso zweckmäßig wird der injektorindividuelle Korrekturwert als Integratorwert einer Regelung bestimmt, bei der die Ist-Einspritzdauer auf die Soll-Einspritzdauer geregelt wird. Nach der Ermittlung des injektorindividuellen Korrekturwerts aus dem Integratorwert erfolgt ein Reset des Integrators.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den durch die vorliegenden Ansprüche definierten Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurze Beschreibung der Zeichnungen
Figur 1 zeigt eine stark schematisierte Darstellung einer Brennkraftmaschine mit einer Kraftstoffeinspritzanlage und einer Mehrzahl von Injektoren.
Figur 2a eine schematische Detailansicht einer beispielhaften Ausführungsform eines Injektors in einem geschlossenen Betriebzustand.
Figur 2b eine schematische Detailansicht einer beispielhaften Ausführungsform eines Injektors in einem geöffneten Betriebzustand.
Figur 3 eine schematisierte Darstellung des Takt- und Nadelhubverlaufs eines Injektors im Teilhubbetrieb.
Figur 4 ein Ansteuerschema für einen Injektor gemäß einer bevorzugten Ausführungsform der Erfindung.

### Ausführungsform(en) der Erfindung

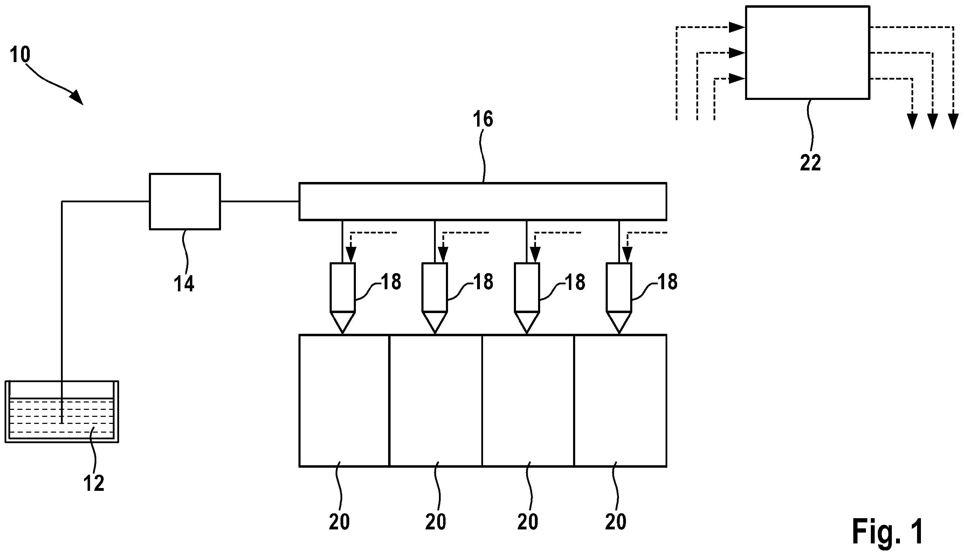

In Figur 1 ist eine Brennkraftmaschine 10 dargestellt, die einen Kraftstoffvorratsbehälter 12 umfasst, aus dem mittels eines Fördersystems 14 Kraftstoff in eine Kraftstoffhochdruckleitung 16 gefördert wird. Die Hochdruckleitung 16 ist beispielsweise als Common-Rail ausgebildet. Die Hochdruckleitung 16 ist mit Injektoren 18 verbunden, die es ermöglichen, Kraftstoff direkt in den Injektoren 18 jeweils zugeordnete Brennräume 20 einzuspritzen. Der Betrieb der Brennkraftmaschine 10 und insbesondere der Kraftstoffeinspritzanlage, die vorliegend das Fördersystem 14, die Hochdruckleitung 16 und die Injektoren 18 aufweist, wird von einer Recheneinheit, hier einem Steuergerät 22, gesteuert. Das Steuergerät 22 ermöglicht die Erfassung von Eingabewerten und die Bereitstellung von Ausgabewerten bzw. die Ansteuerung von Aktoren, insbesondere die Ansteuerung der Injektoren 18.

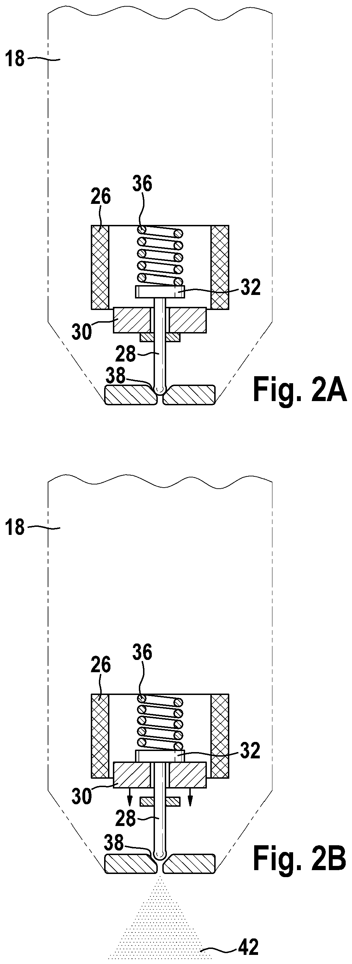

In Figur 2a ist ein in Figur 1 gezeigter Injektor 18 vergrößert in geschlossenem Zustand, in Figur 2b in geöffnetem Zustand schematisch dargestellt. Der Injektor 18 weist einen elektromagnetischen Aktor auf, der eine Magnetspule 26 und einen mit der Magnetspule 26 zusammenwirkenden Magnetanker 30 besitzt. Der Magnetanker 30 ist so mit einer Ventilnadel 28 verbunden, dass er bezogen auf eine in Figur 2 vertikale Bewegungsrichtung der Ventilnadel 28 bewegbar ist. Eine Ventilfeder 36 übt eine Federkraft auf die Ventilnadel 28 aus, so dass diese in einem Ventilsitz 38 gehalten wird.

Eine Ansteuerung des Injektors 18 durch das Steuergerät 22 bewirkt eine Bestromung der Magnetspule 26, wodurch sich der Magnetanker 30 nach oben bewegt, so dass er unter Eingreifen in einen Anschlag 32 die Ventilnadel 28 gegen die Federkraft aus ihrem Ventilsitz 38 herausbewegt. Diese Situation ist in Figur 2b gezeigt. Dort kann nun Kraftstoff 42 von dem Injektor 18 in den Brennraum 20 eingespritzt werden.

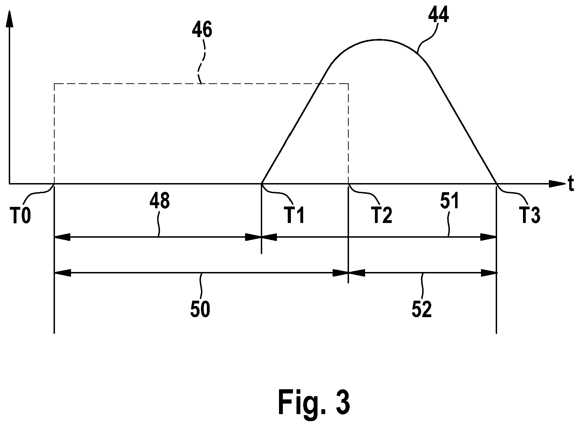

In Figur 3 sind beispielhaft ein vereinfachter Taktverlauf 46 und Nadelhubverlauf 44 eines Injektors 18 im Teilhubbetrieb dargestellt. In einem Zeitpunkt T0 erfolgt eine Ansteuerung des Injektors 18 mittels des sogenannten Taktsignals 46 durch das Steuergerät 22. Mit einer als Abhebeverzögerung 48 bezeichneten zeitlichen Verzögerung erfolgt erst zum Zeitpunkt T1 das Öffnen des Injektors 18. Zu einem Zeitpunkt T2 wird die Ansteuerung des Injektors 18 mittels des Taktsignals 46 beendet und zu einem Zeitpunkt T3 ist der Injektor 18 wieder geschlossen. Der Zeitraum zwischen den Zeitpunkten T0 und T2 wird als Ansteuerdauer 50, der Zeitraum zwischen den Zeitpunkten T1 und T3 als Einspritzdauer 51 und der Zeitraum zwischen den Zeitpunkten T2 und T3 als Schließdauer 52 bezeichnet.

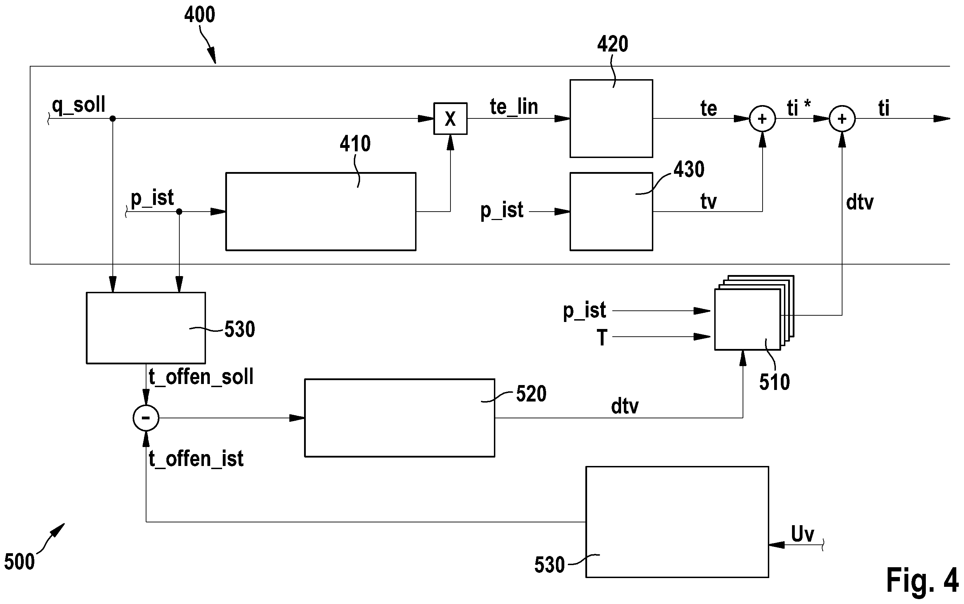

Das Steuergerät 22 ist programmtechnisch zur Durchführung eines erfindungsgemäßen Verfahrens eingerichtet, wie es nachfolgend unter Bezugnahme auf Figur 4 beispielhaft erläutert wird.

In Figur 4 ist ein Ansteuerschema einer bevorzugten Ausführungsform der Erfindung dargestellt, bei dem auf Grundlage einer Soll-Einspritzmenge q_soll und eines Ist-Drucks p_ist des einzuspritzenden Kraftstoffs, beispielsweise im Common-Rail 16, eine Ansteuerdauer ti (vgl. 50 gemäß Figur 3) bestimmt wird. Das Ansteuerschema gliedert sich in einen herkömmlichen Vorsteuerteil 400, der in der Figur 4 in der oberen Hälfte abgebildet ist, und einen zusätzlichen Korrekturteil 500, der in Figur 4 in der unteren Hälfte abgebildet ist.

Im Folgenden soll nun die Funktionsweise des Vorsteuerteils 400 erläutert werden. Aus der Soll-Einspritzmenge q_soll und dem Ist-Druck p_ist wird ein normierter Wert te_lin für die Einspritzdauer bestimmt, wobei der Ist-Druck p_ist über ein Korrekturglied 410, welches insbesondere eine sogenannte Bernoulli-Korrektur durchführt, eingeht. In dem Korrekturglied 410 wird ein Korrekturfaktor für die Einspritzmenge anhand einer Referenzeinspritzmenge, einem Referenzdruck und dem Ist-Druck bestimmt.

Der normierte Wert te_lin wird einem ersten Kennlinienglied 420 zugeführt, welches eine Ansteuerdauer te bestimmt. Der Ansteuerdauer te wird ein erster Korrekturwert tv additiv zugeführt, um die eigentliche Ansteuerdauer ti* zu bestimmen. Der erste Korrekturwert tv ergibt sich in Abhängigkeit von Ist-Druck p_ist aus einem weiteren Kennlinienglied 430.

Die soeben erläuterte Vorsteuerung wird im Rahmen der Erfindung durch den Korrekturteil 500 injektorindividuell korrigiert. Dazu wird ein injektorindividueller Korrekturwert dtv ebenfalls additiv zugeführt, um die Ansteuerzeit ti zu bestimmen. Der injektorindividuelle Korrekturwert dtv ergibt sich aus einem druck- und temperaturabhängigen Kennfeldglied 510, dem der Ist-Druck p_ist und die Temperatur T des einzuspritzenden Kraftstoffs zugeführt werden. Die Temperatur kann bspw. gemessen werden. Zweckmäßigerweise kann es sich auch um eine modellierte Temperatur für den Kraftstoff im Injektor handeln. Das Kennfeldglied 510 dient insbesondere zur Vereinfachung des Rechenaufwands, da zur Bestimmung der Ansteuerdauer ti nur der jeweilige injektorindividuelle Korrekturwert dtv für den gegebenen Betriebspunkt (Druck und Temperatur) ausgelesen werden muss.

Die Befüllung des Kennfeldglieds 510 erfolgt - zweckmäßigerweise von einem Koordinator (als Programmteil im Steuergerät abgelegt) gesteuert - über ein Adaptionsglied 520, wobei nachfolgend eine bevorzugte Durchführungsmöglichkeit näher beschrieben werden soll. Aufgabe des Koordinators ist es, die Einschaltbedingungen für die Adaption zu überwachen, die Kalibrierung auszulösen und Korrekturwerte freizugeben.

Ausgehend von der Soll-Einspritzmenge q_soll und dem Ist-Druck p_ist wird von einem Kennlinienglied 530, welches beispielsweise empirisch befüllt worden ist, eine Soll-Einspritzdauer t_offen_soll bestimmt. Gleichzeitig wird auf Grundlage eines modellbasierten Berechnungsglieds 530, dem beispielsweise die an dem Injektor anliegende Spannung Uv zugeführt wird, die Ist-Einspritzdauer t_offen_ist bestimmt. Alternativ kann die Ist-Einspritzdauer auch gemessen werden.

Die Differenz zwischen Soll-Einspritzdauer und Ist-Einspritzdauer wird dem Adaptionsglied 520 zugeführt.

Gemäß einer bevorzugten Ausführungsform der Erfindung bestimmt das Adaptionsglied eine Abhängigkeit der Ist-Einspritzdauer von der Soll-Einspritzdauer für einen festen Betriebspunkt. Aus dieser Abhängigkeit kann dann der entsprechende Korrekturwert dtv für den Betriebspunkt (p_ist/T) bestimmt werden.

Ist anfangs die Differenz zwischen Soll-Einspritzdauer t_offen_soll und Ist-Einspritzdauer t_offen_ist größer Null, d.h. t_offen_soll > t_offen_ist, wird die Ansteuerdauer erhöht, in bevorzugter Ausgestaltung um einen vorgebbaren Wert Δ. Dies wird schrittweise wiederholt, bis schließlich die Ist-Einspritzdauer t_offen_ist größer oder gleich der Soll-Einspritzdauer t_offen_soll geworden ist. In erster Ausgestaltung bestimmt sich der zugehörige injektorindividuelle Korrekturwert dtv aus der Differenz der momentanen und der anfänglichen Ansteuerdauer zu dtv = ti - ti*.

In weiterer Ausgestaltung kann zur Verbesserung des Ergebnisses eine Extra- oder Interpolation durchgeführt werden. Dazu wird das sich am Ende ergebende Wertepaar ti(t_offen_ist) aus Ist-Einspritzdauer und Ansteuerdauer zwischengespeichert. Aus der Zwischenspeicherung werden dann die beiden Wertepaare ti_1(t_offen_ist_1) und ti_2(t_offen_ist_2) entnommen, die der Soll-Einspritzdauer t_offen_soll am nächsten (in derselben oder in unterschiedlichen Richtungen) liegen, um daraus durch Extra- oder vorzugsweise Interpolation ti(t_offen_soll) zu bestimmen. Auch hier bestimmt sich der zugehörige injektorindividuelle Korrekturwert dtv wieder aus der Differenz dtv = ti - ti*

Ist anfänglich die Differenz zwischen Soll-Einspritzdauer t_offen_soll und Ist-Einspritzdauer t_offen_ist kleiner Null, d.h. t_offen_soll < t_offen_ist, wird die Ansteuerdauer verringert, in bevorzugter Ausgestaltung um den Wert Δ, und es wird entsprechend fortgefahren.

## Patentansprüche

1. Verfahren zur Ansteuerung eines Injektors (18) in einer Kraftstoffeinspritzanlage in einer Brennkraftmaschine (10), wobei die Kraftstoffeinspritzanlage eine Mehrzahl von Injektoren (18) umfasst und wobei eine mittels eines Injektors (18) eingespritzte Kraftstoffmenge von der Ansteuerdauer (ti; 50) des Injektors abhängt, **dadurch gekennzeichnet, dass** für mindestens einen Injektor (18) ein injektorindividueller Korrekturwert (dtv) für die Ansteuerdauer (ti; 50) in Abhängigkeit von einem Druck (p_ist) des einzuspritzenden Kraftstoffs und einer Temperatur (T) des einzuspritzenden Kraftstoffs ermittelt und in einem temperaturabhängigen und druckabhängigen Kennfeld (510) hinterlegt wird und die Ansteuerung für diesen Injektor (18), im Teilhubbetrieb, unter Berücksichtigung des sich aus dem temperaturabhängigen und druckabhängigen Kennfeld (510) ergebenden Injektor individuellen Korrekturwerts (dtv) erfolgt, wobei der Injektor individuelle Korrekturwert (dtv) während des Betriebs zu vorbestimmten Zeitpunkten und/oder regelmäßig und/oder bei Auftreten vorbestimmter Bedingungen bestimmt wird.

2. Verfahren nach Anspruch 1, wobei der injektorindividuelle Korrekturwert (dtv) über das druck- und temperaturabhängige Kennfeld (510) in eine Vorsteuerung der Ansteuerdauer (ti; 50) eingeht.

3. Verfahren nach einem der vorstehenden Ansprüche, wobei der injektorindividuelle Korrekturwert (dtv) auf Grundlage einer Abweichung zwischen einer Ist-Einspritzdauer (t_offen_ist; 51) und einer Soll-Einspritzdauer (t_offen_soll) dieses Injektors (18) ermittelt wird.

4. Verfahren nach Anspruch 3, wobei die Soll-Einspritzdauer (t_offen_soll) mittels eines von einer Soll-Einspritzmenge (q_soll) und dem Druck (p_ist) des einzuspritzenden Kraftstoffs abhängigen Kennfelds (530) ermittelt wird.

5. Verfahren nach Anspruch 3 oder 4, wobei die Ist-Einspritzdauer (t_offen_ist; 51) gemessen oder modellbasiert bestimmt wird.

6. Verfahren nach einem der Ansprüche 3 bis 5, wobei bei festem Druck und fester Temperatur des einzuspritzenden Kraftstoffs eine Soll-Einspritzmenge (q_soll) variiert wird, um damit die Soll-Einspritzdauer (t_offen_soll) zu variieren und den injektorindividuellen Korrekturwert (dtv) aus einer Abhängigkeit der Ist-Einspritzdauer (t_offen_ist; 51) von der Soll-Einspritzdauer (t_offen_soll) zu ermitteln.

7. Verfahren nach einem der Ansprüche 3 bis 6, wobei die Ansteuerdauer (ti; 50) verringert wird, wenn die Ist-Einspritzdauer (t_offen_ist; 51) länger als die Soll-Einspritzdauer (t_offen_soll) ist, und der injektorindividuelle Korrekturwert (dtv) aus der Veränderung der Ansteuerdauer ermittelt wird.

8. Verfahren nach einem der Ansprüche 3 bis 7, wobei die Ansteuerdauer (ti; 50) erhöht wird, wenn die Ist-Einspritzdauer (t_offen_ist; 51) kürzer als die Soll-Einspritzdauer (t_offen_soll) ist, und der injektorindividuelle Korrekturwert (dtv) aus der Veränderung der Ansteuerdauer ermittelt wird.

9. Verfahren nach einem der Ansprüche 3 bis 6, wobei der injektorindividuelle Korrekturwert (dtv) als Integratorwert einer Regelung bestimmt wird, bei der die Ist-Einspritzdauer (t_offen_ist; 51) auf die Soll-Einspritzdauer (t_offen_soll) geregelt wird.

10. Verfahren nach einem der vorstehenden Ansprüche, wobei die Ermittlung des injektorindividuellen Korrekturwerts (dtv) von einem Koordinator gesteuert wird, der eine Einschaltbedingung für einen Injektorkalibrierungsvorgang überwacht, einen Injektorkalibrierungsvorgang auslöst und/oder den des injektorindividuellen Korrekturwert (dtv) freigibt.

11. Recheneinheit, die dazu eingerichtet ist, ein Verfahren nach einem der vorstehenden Ansprüche durchzuführen.

## Claims

1. Method for actuating an injector (18) of a fuel injection system in an internal combustion engine (10), wherein the fuel injection system comprises a multiplicity of injectors (18), and wherein a quantity of fuel which is injected by means of an injector (18) depends on the actuation period (ti; 50) of the injector, **characterized in that** an injector-specific correction value (dtv) for the actuation period (ti; 50) is determined for at least one injector (18) as a function of a pressure (p_act) of the fuel to be injected and of a temperature (T) of the fuel to be injected and is stored at a temperature-dependent and pressure-dependent characteristic diagram (510), and the actuation for this injector (18) takes place in the partial stroke operating mode, taking into account the injector-specific correction value (dtv) which results from the temperature-dependent and pressure-dependent characteristic diagram (510), wherein the injector-specific correction value (dtv) is determined during the operation, at predetermined times and/or regularly and/or when predetermined conditions occur.

2. Method according to Claim 1, wherein the injector-specific correction value (dtv) is input into a pilot control system of the actuation period (ti; 50) by means of the pressure-dependent and temperature-dependent characteristic diagram (510).

3. Method according to one of the preceding claims, wherein the injector-specific correction value (dtv) is determined on the basis of a difference between an actual injection period (t_open_act; 51) and a setpoint injection period (t_open_setp) of this injector (18).

4. Method according to Claim 3, wherein the setpoint injection period (t_open_setp) is determined by means of a characteristic diagram (530) which is dependent on a setpoint injection quantity (q_setp) and the pressure (p_act) of the fuel to be injected.

5. Method according to Claim 3 or 4, wherein the actual injection period (t_open_act; 51) is measured or determined in a model-based fashion.

6. Method according to one of Claims 3 to 5, wherein a setpoint injection quantity (q_setp) is varied with a fixed pressure and fixed temperature of the fuel to be injected, in order thereby to vary the setpoint injection period (t_open_setp) and to determine the injector-specific correction value (dtv) from a dependence of the actual injection period (t_open_act; 51) on the setpoint injection period (t_open_setp).

7. Method according to one of Claims 3 to 6, wherein the actuation period (ti; 50) is reduced if the actual injection period (t_open_act; 51) is longer than the setpoint injection period (t_open_setp), and the injector-specific correction value (dtv) is determined from the change in the actuation period.

8. Method according to one of Claims 3 to 7, wherein the actuation period (ti; 50) is increased if the actual injection period (t_open_act; 51) is shorter than the setpoint injection period (t_open_setp), and the injector-specific correction value (dtv) is determined from the change in the actuation period.

9. Method according to one of Claims 3 to 6, wherein the injector-specific correction value (dtv) is determined as an integrator value of a controller in which the actual injection period (t_open_act; 51) is adjusted to the setpoint injection period (t_open_setp).

10. Method according to one of the preceding claims, wherein the determination of the injector-specific correction value (dtv) is controlled by a co-ordinator which monitors a switch-on condition for an injector calibration process, triggers an injector calibration process and/or releases the injector-specific correction value (dtv).

11. Computing unit which is configured to carry out a method according to one of the preceding claims.

## Revendications

1. Procédé de commande d'un injecteur (18) dans une installation d'injection de carburant dans un moteur à combustion interne (10), l'installation d'injection de carburant comprenant une pluralité d'injecteurs (18) et une quantité de carburant injectée au moyen d'un injecteur (18) dépendant de la durée de commande (ti ; 50) de l'injecteur, **caractérisé en ce que** pour au moins un injecteur (18), une valeur de correction individuelle pour l'injecteur (dtv) étant déterminée pour la durée de commande (ti ; 50) en fonction d'une pression (p_ist) du carburant à injecter et d'une température (T) du carburant à injecter et étant consignée dans un champ caractéristique (510) dépendant de la température et de la pression, et la commande pour cet injecteur (18), en mode de fonctionnement à charge partielle, s'effectuant en tenant compte de la valeur de correction (dtv) individuelle pour l'injecteur résultant du champ caractéristique (510) dépendant de la température et de la pression, la valeur de correction individuelle pour l'injecteur (dtv) étant déterminée pendant le fonctionnement à des instants prédéterminés et/ou régulièrement et/ou en présence de conditions prédéterminées.

2. Procédé selon la revendication 1, dans lequel la valeur de correction (dtv) individuelle pour l'injecteur est obtenue par le biais du champ caractéristique (510) dépendant de la pression et de la température dans une commande pilote de la durée de commande (ti ; 50).

3. Procédé selon l'une quelconque des revendications précédentes, dans lequel la valeur de correction (dtv) individuelle pour l'injecteur est déterminée sur la base d'un écart entre une durée d'injection réelle (t_offen_ist ; 51) et une durée d'injection de consigne (t_offen_soll) de cet injecteur (18).

4. Procédé selon la revendication 3, dans lequel la durée d'injection de consigne (t_offen_soll) est déterminée au moyen d'un champ caractéristique (530) dépendant d'une quantité d'injection de consigne (q_soll) et de la pression (p_ist) du carburant à injecter.

5. Procédé selon la revendication 3 ou 4, dans lequel la durée d'injection réelle (t_offen_ist ; 51) est mesurée ou est déterminée sur la base d'un modèle.

6. Procédé selon l'une quelconque des revendications 3 à 5, dans lequel, à pression et température fixes du carburant à injecter, une quantité d'injection de consigne (q_soll) est variée afin de faire varier en conséquence la durée d'injection de consigne (t_offen_soll) et de déterminer la valeur de correction (dtv) individuelle pour l'injecteur à partir d'une dépendance entre la durée d'injection réelle (t_offen_ist ; 51) et la durée d'injection de consigne (t_offen_soll).

7. Procédé selon l'une quelconque des revendications 3 à 6, dans lequel la durée de commande (ti ; 50) est réduite lorsque la durée d'injection réelle (t_offen_ist ; 51) est plus longue que la durée d'injection de consigne (t_offen_soll), et la valeur de correction (dtv) individuelle pour l'injecteur est déterminée à partir de la variation de la durée de commande.

8. Procédé selon l'une quelconque des revendications 3 à 7, dans lequel la durée de commande (ti ; 50) est augmentée si la durée d'injection réelle (t_offen_ist ; 51) est plus courte que la durée d'injection de consigne (t_offen_soll), et la valeur de correction (dtv) individuelle pour l'injecteur est déterminée à partir de la variation de la durée de commande.

9. Procédé selon l'une quelconque des revendications 3 à 6, dans lequel la valeur de correction (dtv) individuelle pour l'injecteur est déterminée sous forme de valeur d'intégration d'un réglage dans lequel la durée d'injection réelle (t_offen_ist ; 51) est ajustée à la durée d'injection de consigne (t_offen_soll).

10. Procédé selon l'une quelconque des revendications précédentes, dans lequel la détermination de la valeur de correction (dtv) individuelle pour l'injecteur est commandée par un coordinateur qui surveille une condition d'enclenchement pour une opération d'étalonnage de l'injecteur, déclenche une opération d'étalonnage de l'injecteur et/ou libère la valeur de correction (dtv) individuelle pour l'injecteur.

11. Ordinateur prévu pour mettre en oeuvre un procédé selon l'une quelconque des revendications précédentes.
